# EUROPÄISCHE PATENTSCHRIFT

(11) **EP 1 219 152 B1**
(45) Veröffentlichungstag und Bekanntmachung des Hinweises auf die Patenterteilung: **23.03.2005**
(21) Anmeldenummer: 01129910.4
(22) Anmeldetag: 15.12.2001
(51) Int. Cl.: A01B 73/00

(54) **Transportwagen eines Schneidewerks**
Header transport trailer
Chariot de transport pour tablier de coupe

(30) Priorität: 23.12.2000 DE 10064961
(43) Veröffentlichungstag der Anmeldung: 03.07.2002
(73) Patentinhaber: DEERE & COMPANY, Moline, Illinois 61265-8098 (US)
(72) Erfinder: Zürn, Rolf, 74214 Schöntal-Westernhausen (DE); Bauer, Ewald, 74219 Möckmühl (DE); Braunhardt, Klaus, 66482 Zweibrücken (DE); Ziegler, Christian, 66557 Illingen/Saar (DE); Herlitzius, Thomas, 66503 Dellfeld (DE); Welsch, Thomas, 66453 Gersheim (DE)
(74) Vertreter: Holst, Sönke, Dr.

(56) Entgegenhaltungen:
- EP-A- 1 066 744
- IT-B- 1 223 703
- US-A- 4 371 299
- US-A- 4 714 273
- US-A- 4 770 577
- US-A- 4 834 598
- US-A- 5 529 447

## Beschreibung

Die Erfindung betrifft einen Transportwagen mit einem Fahrgestell, an dem ein Ablageelement zur Aufnahme eines Schneidwerks und/oder eines Vorsatzschneidwerks angebracht ist, wobei das Ablageelement um eine Achse verschwenkbar am Fahrgestell gelagert ist.

Zur Ernte von Raps mit einem Mähdrescher sind sogenannte Raps-Vorsatzschneidwerke bekannt, die an normalen Schneidwerken anbringbar sind und eine Schneidtischverlängerung mit angetriebenen Schneidmessern, die das Schneidwerk in der Vortriebsrichtung des Mähdreschers verlängert, sowie beidseits des Schneidtisches angeordnete Seitenschneidwerke aufweisen. Die Schneidtischverlängerung und die Seitenschneidwerke sind zweckmäßig, um den Raps, der ein zusammenhängendes Buschwerk bildet, zu zerschneiden.

Sollen Raps-Vorsatzschneidwerke eingesetzt werden, werden sie in der Regel am Schneidwerk befestigt und gemeinsam mit dem Schneidwerk auf einem Wagen zum abzuerntenden Feld befördert. Als nachteilig ist dabei anzusehen, dass es nicht möglich ist, das Schneidwerk durch Anbringen bzw. Abnehmen des Vorsatzschneidwerks auf unterschiedliche Erntegüter umzustellen, ohne auf eine feste, ebene Oberfläche zurückzukehren, um das Raps-Vorsatzschneidwerk beim Anbringen und Abnehmen darauf abzustellen.

Die IT 1 223 703 A offenbart einen Transportwagen für Erntevorsätze, der eine einzige Ablagefläche für einen Erntevorsatz aufweist. Durch einen Hydraulikzylinder wird die Ablagefläche um eine horizontale, parallel zur Fahrtrichtung verlaufende Achse zwischen einer etwa vertikalen Transportstellung und einer etwa horizontalen Stellung, in der ein Erntevorsatz abnehm- bzw. ablegbar ist, verschwenkt. Dieser Wagen bildet zwar eine feste Ablagefläche, doch müsste der Bediener das am Mähdrescher angebrachte Schneidwerk genau in das Vorsatzschneidwerk einfädeln, was nicht unproblematisch ist.

In der US 4 770 577 A ist ein Transportwagen für Erntevorsätze von Mähdreschern beschrieben, der beidseits einer vertikalen Stütze jeweils eine Ablagefläche für einen Erntevorsatz aufweist. Ein Hydraulikzylinder bewirkt, dass die zum Ablegen bzw. Aufnehmen des Erntevorsatzes durch den Mähdrescher näherungsweise horizontalen Ablageflächen zum Transport um eine horizontale, in Fahrtrichtung verlaufende Achse nach oben verschwenkt werden, so dass die Transportbreite vermindert ist. Die Ablageflächen werden synchron miteinander verschwenkt. Es wäre zwar denkbar, auf diesem Wagen ein Schneidwerk und ein Vorsatzschneidwerk getrennt zu transportieren, jedoch ist auch hier das Schneidwerk zur Anbringung des Vorsatzschneidwerks hinreichend genau zu positionieren.

In der nachveröffentlichten DE 199 31 281 A wird ein Schneidwerkstransportwagen beschrieben, der eine erste Ablagefläche für ein Schneidwerk und eine zweite Ablagefläche für ein Vorsatzschneidwerk, insbesondere zur Rapsernte, aufweist. Die beiden Ablageflächen sind relativ zueinander bewegbar, insbesondere verschiebbar und/oder verschwenkbar, um das Vorsatzschneidwerk an ein Schneidwerk heranzubringen oder von ihm abzuziehen.

Das der Erfindung zugrunde liegende Problem wird darin gesehen, einen verbesserten Transportwagen für ein Schneidwerk und ein Vorsatzschneidwerk zu schaffen, bei dem die Anbringung des Vorsatzschneidwerks am Schneidwerk erleichtert ist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung bezieht sich auf einen Transportwagen mit einem Fahrgestell, an dem ein Ablageelement um eine Achse schwenkbar abgestützt ist. Auf dem Ablageelement kann ein Schneidwerk und/oder ein Vorsatzschneidwerk abgelegt werden. Es wird vorgeschlagen, dass das die Achse tragende oder halternde Element seinerseits ebenfalls beweglich ist, und zwar um eine Schwenkachse verschenkbar. Dadurch kann die Position der Achse gegenüber dem Fahrgestell verlagert werden.

Auf diese Weise erhält das Ablageelement zwei Freiheitsgrade, nämlich die an sich bekannte Drehung um die Achse und die zusätzliche, erfindungsgemäße Schwenkbewegung der Achse. Eine Schwenk- oder Drehbewegung lässt sich in der Regel einfacher realisieren als eine Verschiebebewegung, wie sie in der DE 199 31 281 A beschrieben wird.

Es wäre denkbar, das die Achse halternde Element in der Art eines Kugelkopfs zu gestalten, was ein Verschwenken des Ablaugeelements um zwei zueinander orthogonale Achsen ermöglichen würde. So könnte es zwischen einer platzsparenden Ruhestellung, in der es nach unten und entlang der Fahrtrichtung orientiert ist, und einer Transportstellung, in der es näherungsweise horizontal und quer zur Fahrtrichtung angeordnet ist und ein Schneidwerk aufnehmen kann, verlagerbar sein. Bevorzugt ist allerdings, dass das die Achse tragende Element um eine von der Achse beabstandete Schwenkachse verschwenkbar ist. Das Ergebnis ist, dass die Bewegung um die Schwenkachse die Position der Achse - und damit bei horizontaler Schwenkachse die Höhe der Achse - definiert. Bei horizontaler Achse definiert die Drehung des Ablageelements um die Achse die Neigung des Ablageelements. Dabei verlaufen die Achse und die Schwenkachse des Elements vorzugsweise parallel. Das Ablageelement kann somit beliebige Stellungen einnehmen, beispielsweise kann es horizontal orientiert und nach unten abgesenkt oder gegenüber der Horizontalen geneigt und angehoben werden.

Dem die Achse halternden Element ist vorzugsweise ein erster Antrieb zugeordnet, vorzugsweise ein Hydraulikzylinder, der das Element um die Schwenkachse bewegt. Er kann eine Welle drehen, an dem das Element befestigt ist, und deren Längsachse mit der Schwenkachse übereinstimmt. An der Welle können mehrere Elemente befestigt sein, die jeweils eine Achse haltern, an der ein Ablageelement drehbar gelagert ist.

Ein zweiter Antrieb kann der Drehbewegung des Ablageelements um die Achse zugeordnet sein. Auch hier kommt vorzugsweise ein Hydraulikzylinder in Betracht, obwohl - wie auch beim ersten Antrieb - beliebige andere Antriebseinrichtungen verwendbar sind, wie z. B. Hydraulik-, Verbrennungs- und Elektromotore.

Vorzugsweise weist der Transportwagen außer dem oben beschriebenen, verschwenkbaren Ablageelement noch ein weiteres Ablageelement auf, das zur Aufnahme eines Schneidwerks oder eines Vorsatzschneidwerks dienen kann. Es wäre denkbar, das weitere Ablageelement beweglich zu gestalten, insbesondere wie das verschwenkbare Ablageelement. Bevorzugt ist aber, das weitere Ablageelement starr oder gegebenenfalls mit einer oder mehreren Federn oder ähnlichen, elastischen Elementen flexibel an Fahrgestell des Transportwagens zu befestigen. Ein Antrieb zur Bewegung des weiteren Ablageelements erübrigt sich dadurch.

Bei der Ernte von Raps oder ähnlichen Gütern, bei denen der Einsatz eines Vorsatzschneidwerks erforderlich ist, bietet es sich an, das Schneidwerk auf dem weiteren Ablageelement abzulegen und das Vorsatzschneidwerk auf dem beweglichen Ablageelement. Dabei liegen das weitere Ablageelement und das bewegliche Ablageelement zweckmäßigerweise in derselben Ebene, die vorzugsweise zum leichteren Ablegen des Schneidwerks durch einen Mähdrescher leicht gegenüber der Horizontalen geneigt verläuft. Durch die Beweglichkeit des beweglichen Ablageelements besteht die Möglichkeit, nach Lösen einer mechanischen Verbindung zwischen Schneidwerk und Vorsatzschneidwerk das Vorsatzschneidwerk durch Drehen des Ablageelements um die Achse vom Schneidwerk zu trennen, wobei ein relativ geringer Drehwinkel zur Trennung ausreichen kann, und anschließend durch eine Schwenkbewegung des die Position der Achse definierenden Elements um die Schwenkachse in eine Transportstellung nach unten abzusenken. Die Drehbewegung um die Achse definiert dann die Neigung des beweglichen Ablageelements. Analog kann das Ablageelement wieder nach oben verbracht werden, um das Vorsatzschneidwerk an das Schneidwerk anzubringen.

In den Zeichnungen sind zwei nachfolgend näher beschriebene Ausführungsbeispiele der Erfindung dargestellt. Es zeigt:
- Fig. 1: eine rückwärtige Ansicht eines erfindungsgemäßen Transportwagens, bei der sich ein Ablageelement für ein Vorsatzschneidwerk in einer Stellung befindet, in der ein Vorsatzschneidwerk an ein Schneidwerk anbringbar oder davon abnehmbar ist;
- Fig. 2: den Transportwagen der Figur 1, wobei das Ablageelement des Vorsatzschneidwerks geringfügig nach unten geschwenkt ist;
- Fig. 3: den Transportwagen der Figur 1, wobei das Ablageelement des Vorsatzschneidwerks nach unten abgesenkt und in eine horizontale Lage gedreht ist;
- Fig. 4: den Transportwagen der Figur 1, wobei das Ablageelement des Vorsatzschneidwerks nach unten abgesenkt und nach außen bewegt ist;
- Fig. 5: eine perspektivische Ansicht des Transportwagens der Figuren 1 bis 4;
- Fig. 6: eine rückwärtige Ansicht einer zweiten Ausführungsform eines Transportwagens, bei der das Ablageelement für ein Vorsatzschneidwerk sich in einer Stellung befindet, in der ein Vorsatzschneidwerk an ein Schneidwerk anbringbar oder davon abnehmbar ist;
- Fig. 7: den Transportwagen der Figur 6, wobei das Ablageelement des Vorsatzschneidwerks geringfügig nach unten gekippt ist; und
- Fig. 8: den Transportwagen der Figur 6, wobei das Ablageelement des Vorsatzschneidwerks nach unten abgesenkt ist.

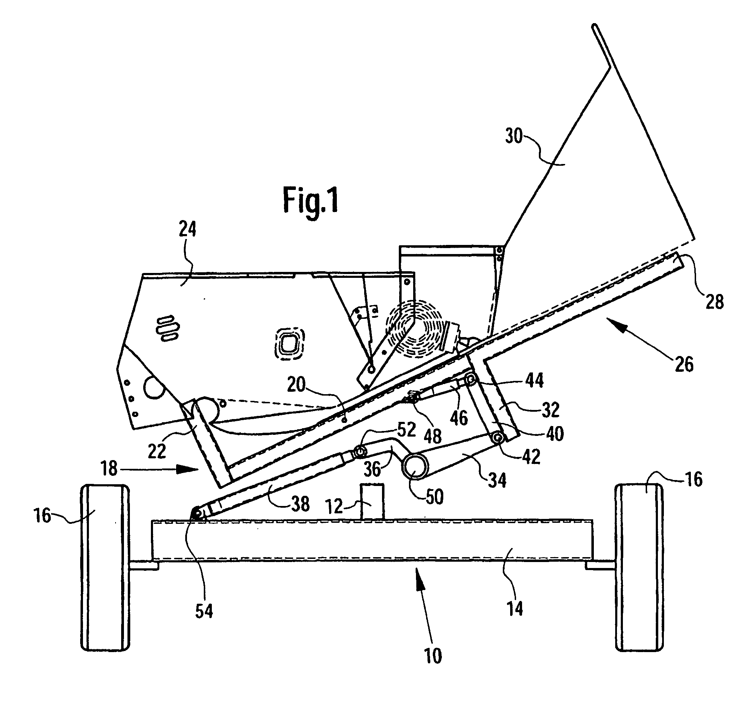

Der in Figur 1 dargestellte Transportwagen 10 besteht in seinem grundsätzlichen Aufbau aus einem sich in Fahrtrichtung erstreckenden Längsträger 12, unter dem sich ein quer zum Längsträger 12 erstreckender Querträger 14 erstreckt, an dessen Enden jeweils ein gummibereiftes Rad 16 mit etwa horizontaler, parallel zum Querträger 14 verlaufender Drehachse angebracht ist. Der Längsträger 12, der Querträger 14 und die Räder 16 bilden ein Fahrgestell des Transportwagens 10.

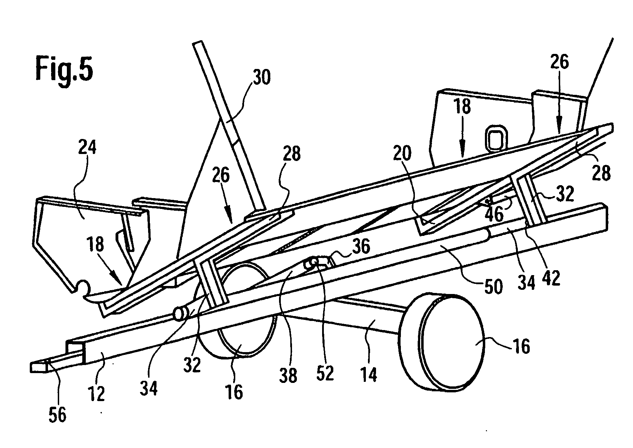

Am Längsträger 12 ist ein Ablageelement 18 starr befestigt, das aus einem sich unter einem Winkel von etwa 30° schräg nach oben erstreckenden ersten Träger 20 und einem am unteren Ende des ersten Trägers 20 angesetzten, sich dazu rechtwinklig nach oben erstreckenden Winkel 22 aufgebaut ist. Auf dem starren Ablageelement 18 ist in Figur 1 ein Schneidwerk 24 für die Getreideernte abgelegt. Das Schneidwerk 24 ist auf dem ersten Träger 20 und dem Winkel 22 abgelegt, wobei letzterer verhindert, dass das Schneidwerk 24 vom Träger 20 nach unten abrutscht. Zum Abstützen des Schneidwerks 24 sind zwei Ablageelemente 18 vorhanden, die in Längsrichtung des Längsträgers 12 voneinander beabstandet sind, wie in Figur 5 erkennbar ist. Ein Mähdrescher kann von links an den Transportwagen 10 heranfahren und das Schneidwerk 24 aufnehmen bzw. ablegen.

Der Längsträger 12 stützt außerdem zwei in Längsrichtung des Längsträgers 12 beabstandete, bewegliche Ablageelemente 26 ab, die je einen sich parallel zum ersten Träger 20 verlaufenden zweiten Träger 28 aufweisen. Der zweite Träger 28 stellt eine Verlängerung des ersten Trägers 20 dar, verläuft also in einer Ebene und koaxial mit ihm. Auf den beweglichen Ablageelementen 26 ist in Figur 1 ein Vorsatzschneidwerk 30 abgelegt. Das Vorsatzschneidwerk 30 und das Schneidwerk 24 sind auf dem in Figur 1 dargestellten Transportwagen 10 derart relativ zueinander positioniert, dass sie durch Anbringung bzw. Abnahme von Befestigungselementen, wie Schrauben, Bolzen oder Splinten, aneinander befestigt bzw. voneinander gelöst werden können. Sind die Befestigungselemente angebracht, kann ein Mähdrescher von der in Figur 1 links eingezeichneten Seite an den Transportwagen 10 heranfahren und das Schneidwerk 24 mit dem daran angebrachten Vorsatzschneidwerk 30 aufnehmen.

Die beweglichen Ablageelemente 26 sind am Längsträger 12 nicht wie die Ablageelemente 18 starr angebracht, sondern verschwenkbar. Dazu ist jeweils der zweite Träger 28 mit einem an seinem unteren, dem starren Ablageelement 18 benachbarten Ende starr angebrachten, um 90° nach unten abgewinkelten Winkelelement 32 ausgestattet, das um eine Achse 42 schwenkbar mit einem Winkelhebel verbunden ist, der aus zwei starr über eine drehbare Welle 50 miteinander verbundenen Hebelarmen 34, 36 besteht. Der erste Hebelarm 34 ist somit einen Endes um die parallel zur Längsachse des Längsträgers 12 verlaufende Achse 42 schwenkbar am Winkelelement 32 befestigt, und anderen Endes mit der Welle 50 verbunden. Die Welle 50 ist, wie in Figur 5 erkennbar, mit dem zweiten Hebelarm 36 verbunden, der bogenförmig gestaltet ist. Die Welle 50 verläuft parallel zur Längsachse des Längsträgers 12, und ist an seiner Oberseite drehbar gelagert angeordnet. Das äußere Ende des zweiten Hebelarms 36 ist um eine parallel zur Längsrichtung des Längsträgers 12 verlaufende Achse 52 schwenkbar mit dem Kolben eines ersten Hydraulikzylinders 38 verbunden. Das Gehäuse des ersten Hydraulikzylinders 38 ist um eine parallel zur Längsachse des Längsträgers 12 verlaufende Achse 54 schwenkbar an der Oberseite des Querträgers 14 angelenkt und befindet sich etwa an der Mitte des Transportwagens 10. Die Welle 50 bewegt die zwei Hebelarme 34, die jeweils über eine Achse 42 mit einem der Träger 28 verbunden sind.

An dem Winkelelement 32 ist ein Verbindungselement 40 starr befestigt, das sich vom unteren Ende des Winkelelements 32 parallel zum Winkelelement 32 nach oben erstreckt und fast unmittelbar unterhalb des ersten Trägers 20 endet. Die rechte Längsseite des Verbindungselements 40 liegt somit an der linken Längsseite des Winkelelements 32 an. An dem Verbindungselement 40 ist schwenkbar um eine Achse 44, die ebenfalls parallel zur Längsachse des Längsträgers 12 verläuft, der Kolben eines zweiten Hydraulikzylinders 46 angelenkt. Das Gehäuse des zweiten Hydraulikzylinders 46 ist über eine Schwenklagerung 48 mit einer parallel zur Längsachse des Längsträgers 12 verlaufenden Achse 48 am ersten Träger 20 angelenkt. Es wäre denkbar, das Winkelelement 32 und das Verbindungselement 40 einteilig zu gestalten. Auch könnte sich das Verbindungselement 40 zwischen zwei Winkelelementen 32 erstrecken, die jeweils einem zweiten Träger 28 zugeordnet sind, um zwei bewegliche Ablageelemente 26 mit nur einem zweiten Hydraulikzylinder 46 bewegen zu können. In der vorliegenden Ausführungsform ist aber jedem Winkelelement 32 ein zweiter Hydraulikzylinder 46 zugeordnet, wie in Figur 5 erkennbar ist.

Der Transportwagen 10 ist mit einer Zugöse 56 versehen, mit der er an einen Mähdrescher oder ein anderes Zugfahrzeug anhängbar ist.

Der erste Hydraulikzylinder 38 und die zweiten Hydraulikzylinder 46 sind doppelt wirkend und werden durch die Hydraulikanlage eines Mähdreschers betrieben. Es wäre aber auch denkbar, den Transportwagen 10 mit einer eigenen Hydraulikanlage zu versehen. Die Ansteuerung der Hydraulikzylinder 38, 46 erfolgt durch eine geeignete Steuereinrichtung vorzugsweise so, wie in den Figuren 1 bis 4 angedeutet ist:

Wurde ein Schneidwerk 24 mit einem daran angebrachten Vorsatzschneidwerk 30 auf dem Transportwagen 10 derart abgelegt, dass das Schneidwerk 24 auf den starren Ablageelementen 18 und das Vorsatzschneidwerk 30 auf den beweglichen Ablageelementen 26 aufliegt, und soll das Vorsatzschneidwerk 30 vom Schneidwerk 24 abgenommen werden, wird zunächst das Vorsatzschneidwerk 30 mechanisch an den beweglichen Ablageelementen 26 arretiert, was durch Anbringen geeigneter Stifte oder dergleichen erfolgen kann. Danach wird die mechanische Verbindung zwischen Vorsatzschneidwerk 30 und Schneidwerk 24 gelöst.

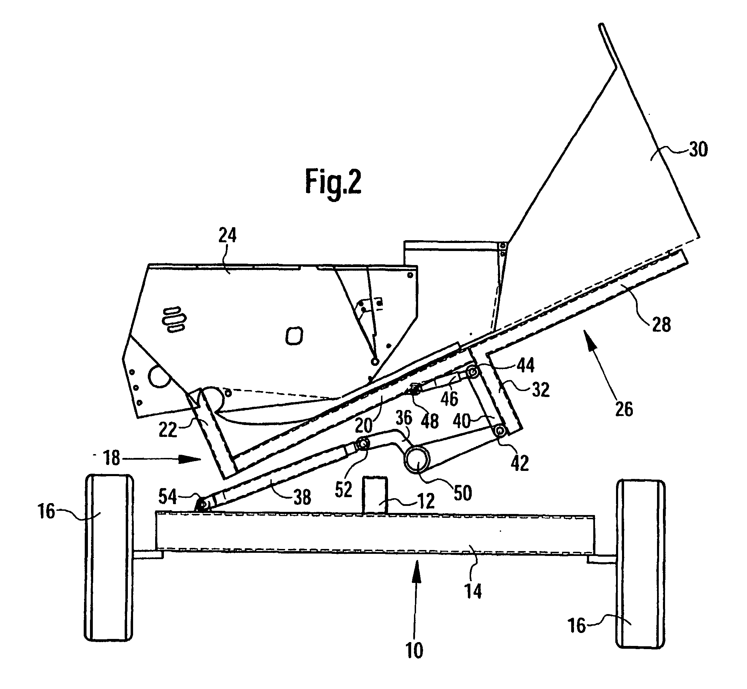

Anschließend wird der zweite Hydraulikzylinder 46 derart angesteuert, dass sein Kolben ausfährt, wie in Figur 2 erkennbar. Dazu kann der Kolbenraum des zweiten Hydraulikzylinders 46 mit Druck beaufschlagt und/oder Hydraulikflüssigkeit aus dem Kolbenstangenraum herausgelassen werden. Der erste Hydraulikzylinder 38 wird nicht bewegt. Die Folge ist, dass sich das bewegliche Ablageelement 26 mit dem Vorsatzschneidwerk 30 um die Achse 42 um etwa 5° im Uhrzeigersinn nach unten dreht, so dass sich das Vorsatzschneidwerk 30 geringfügig vom Schneidwerk 24 fort bewegt. Dabei dreht sich der zweite Hydraulikzylinder 46 an seinen Befestigungspunkten, den Achsen 44 und 48. Diese Schwenkbewegung des beweglichen Ablageelements 26 kann zum Trennen des Vorsatzschneidwerks 30 vom Schneidwerk 24 vorteilhafter als eine Verschiebebewegung sein, und ist konstruktiv leichter realisierbar.

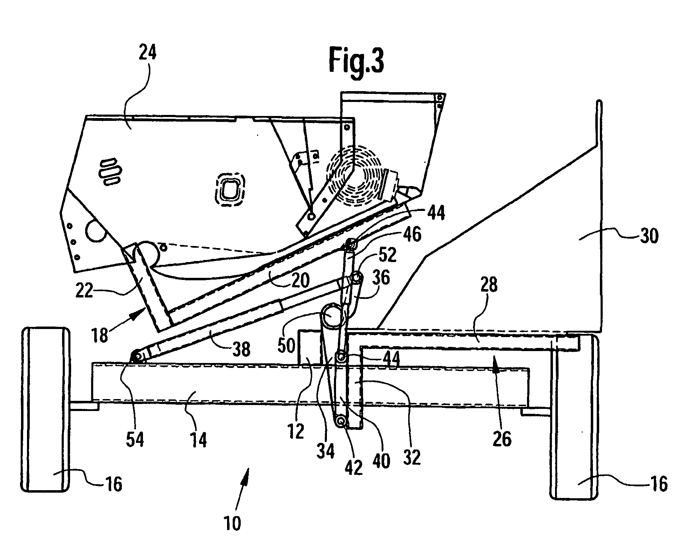

Im Anschluss daran wird auch der erste Hydraulikzylinder 46 derart angesteuert, dass sein Kolben ausfährt, wie in Figur 3 erkennbar. Dazu kann der Kolbenraum des ersten Hydraulikzylinders 46 mit Druck beaufschlagt und/oder Hydraulikflüssigkeit aus dem Kolbenstangenraum herausgelassen werden. Die Folge ist, dass sich die Achse 42 kontinuierlich absenkt, da der erste Hydraulikzylinder 38 den aus den Hebelarmen 34, 36 bestehenden Winkelhebel im Uhrzeigersinn nach unten rotieren lässt. Gleichzeitig wird auch der zweite Hydraulikzylinder 46 derart angesteuert, dass sein Kolben ausfährt. Dadurch dreht sich das zweite Ablageelement 26 im Uhrzeigersinn um die Achse 42. In der in Figur 3 dargestellten Stellung ist das bewegliche Ablageelement 26 in eine horizontale Position gedreht worden. Das Ausfahren der beiden Hydraulikzylinder 38, 46 kann gleichzeitig oder nacheinander erfolgen, oder sie werden jeweils nacheinander um einen kleinen Schritt ausgefahren.

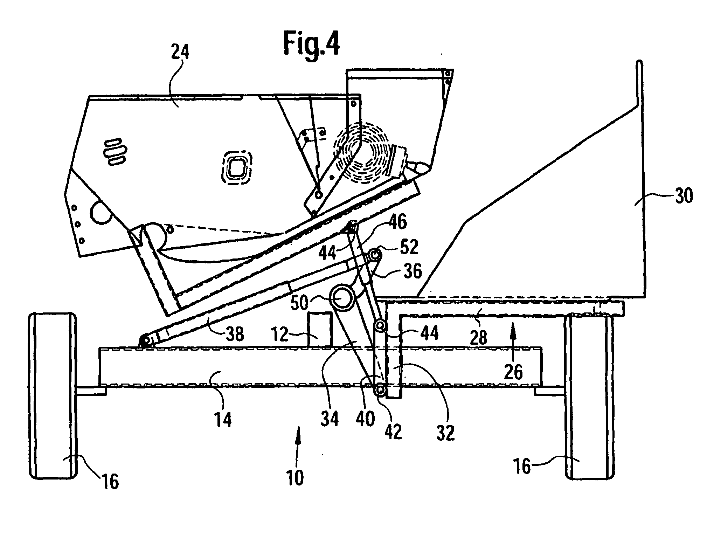

In der in Figur 3 dargestellten Stellung ist das bewegliche Ablageelement 26 in einer horizontalen Stellung, die man prinzipiell als Transportstellung verwenden könnte. Um den Schwerpunkt des Transportwagens 10, der bedingt durch das relativ schwere Schneidwerk 24 links vom Längsträger 12 liegt, weiter in die Mitte des Transportwagens 10 zu verlagern, indem das Vorsatzschneidwerk 30 nach rechts verlagert wird, besteht die Möglichkeit, den Kolben des ersten Hydraulikzylinders 38 wieder um eine bestimmte Wegstrecke einzufahren, so dass sich die Achse 42 im Gegenuhrzeigersinn wieder nach oben, aber auch nach rechts bewegt. Der Kolben des zweiten Hydraulikzylinder 46 wird gleichzeitig oder danach weiter ausgefahren, was zur Folge hat, dass das bewegliche Ablageelement 26 horizontal ausgerichtet bleibt, aber weiter rechts angeordnet ist als in Figur 3. Selbstverständlich kann von der Stellung in Figur 2 ausgehend auch die in Figur 4 angedeutete Position angefahren werden, ohne die Stellung gemäß Figur 3 zu durchlaufen.

Die in Figur 4 dargestellte Stellung kann als Transportstellung dienen, in der das Vorsatzschneidwerk 30 getrennt vom Schneidwerk 24 transportiert wird. In dieser Stellung können auch Wartungsarbeiten am Vorsatzschneidwerk 30 vorgenommen werden. Auch kann der Transportwagen 10 zum Transport des Schneidwerks 24 dienen, ohne dass ein Vorsatzschneidwerk 30 auf dem beweglichen Ablageelement 26 abgelegt ist, wobei letzteres in der in Figur 3 und 4 dargestellten Stellung nicht stört und nicht den Schwerpunkt des Transportwagens 10 unnötig nach oben verlagert, und außerhalb der Erntezeiten, in denen das Vorsatzschneidwerk 30 benötigt wird, als Ablagefläche für beliebige Gegenstände dienen kann. Der Transportwagen 10 ist somit universell einsetzbar.

Soll das Vorsatzschneidwerk 30 wieder an das Schneidwerk 24 montiert werden, werden die Hydraulikzylinder 38, 46 derart angesteuert, dass sie sich gegenüber der in den Figuren 1 bis 4 angedeuteten Bewegung in umgekehrter Weise bewegen. Das Vorsatzschneidwerk 30 wird dann von unten an das Schneidwerk 24 herangeschwenkt und daran mechanisch befestigt. Das Schneidwerk 24 kann dann mit dem daran angebrachten Vorsatzschneidwerk 30 von einem Mähdrescher aufgenommen werden.

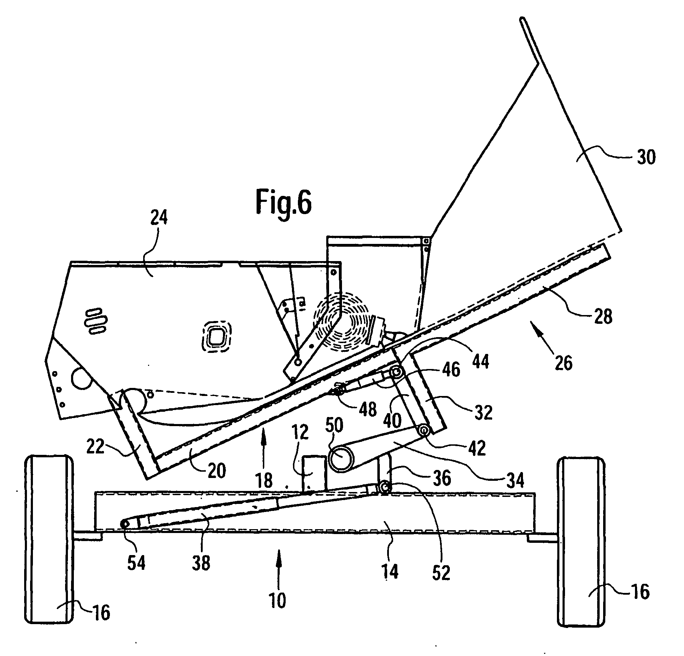

In den Figuren 6 bis 8 ist eine zweite Ausführungsform eines erfindungsgemäßen Transportwagens 10 dargestellt, wobei übereinstimmende Elemente mit Bezugsziffern versehen sind, die denen der ersten Ausführungsform entsprechen. Die zweite ist im wesentlichen mit der ersten Ausführungsform identisch; sie weist jedoch folgende Unterschiede zur ersten Ausführungsform nach Figur 1 bis 5 auf:

Der erste Hydraulikzylinder 38 ist am unteren Rand des Querträgers 14 an der Achse 54 angelenkt. Seine Kolbenstange ist an der Achse 52 mit einem Hebelarm 36 des aus den zwei Hebelarmen 34, 36 aufgebauten Winkelhebels verbunden, wobei der Hebelarm 36 mit der drehbaren Welle 50 verbunden ist, an der die Hebelarme 34 befestigt sind. Der Kolben des ersten Hydraulikzylinders 38 ist in der in Figur 6 dargestellten Position, in der das bewegliche Ablageelement 26 mit dem ersten Ablageelement 18, das ebenfalls starr mit dem Längsträger 12 und/oder dem Querträger 14 verbunden ist, in einer Ebene liegt, ausgefahren. Es kann somit eine einfach wirkende Ausführungsform Verwendung finden, da zum Absenken des beweglichen Ablageelements 26 nur Hydraulikflüssigkeit aus dem Kolbenraum abzulassen und zum Anheben einzufüllen ist. Die Aufgabe des ersten Hydraulikzylinders 38 besteht darin, die Lage der Achse 42 durch Drehen der Welle 50 und des Hebelarms 34 festzulegen.

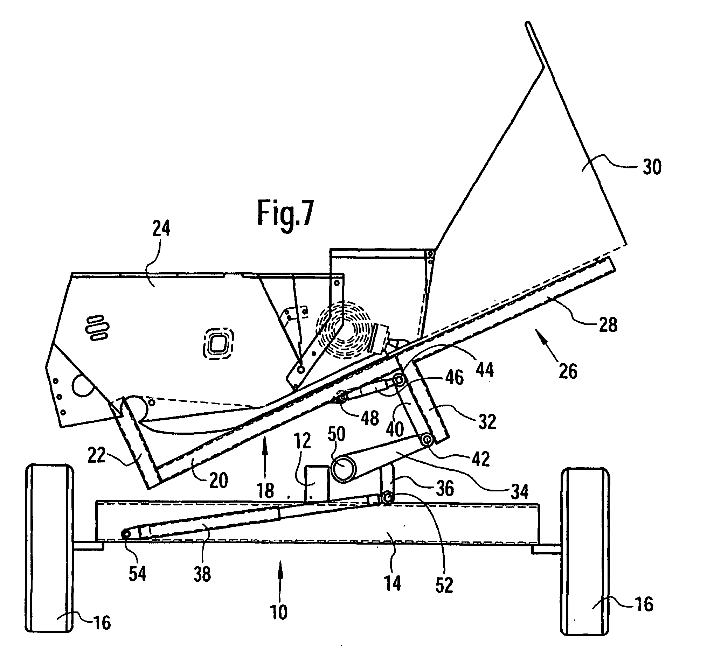

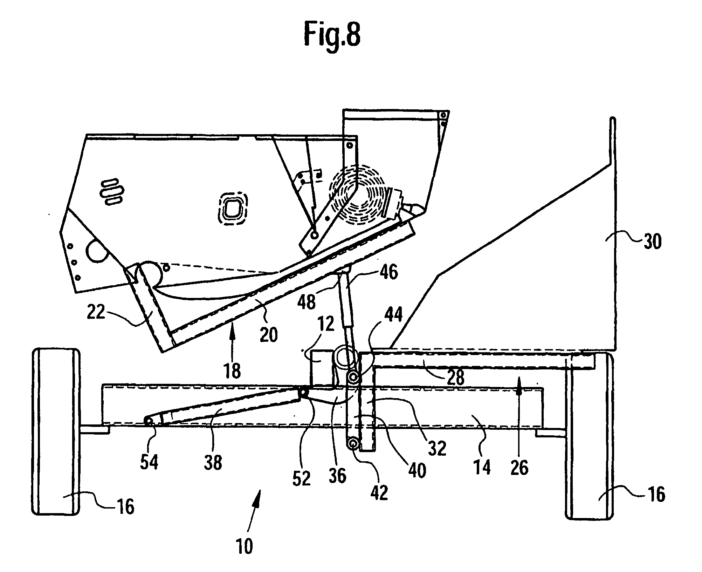

Anhand der Figuren 7 und 8 ist erkennbar, dass die Bewegungsweise des beweglichen Ablageelements 26 der zweiten Ausführungsform der Bewegungsweise der ersten Ausführungsform entspricht, wie sie in den Figuren 1 bis 3 dargestellt ist. Auch hier wird das Vorsatzschneidwerk 30 gegenüber dem Schneidwerk 24 zuerst nach unten verkippt, und dann in eine abgesenkte, etwa horizontale Lage verbracht. Dabei wird der Kolben des ersten Hydraulikzylinders 38 jedoch nicht ausgefahren, sondern eingezogen. Das Anheben des beweglichen Ablageelements 26 erfolgt in umgekehrter Weise.

Auch bei der zweiten Ausführungsform wäre denkbar, nur einen zweiten Hydraulikzylinder 46 zu verwenden, der mit beiden beweglichen Ablageelementen 26 gekoppelt ist. Auch kann jedem Ablageelement ein erster Hydraulikzylinder 38 zugeordnet werden. In jedem Fall werden die zwei Ablageelementen 26 zugeordneten Hydraulikzylinder synchron angesteuert, so dass beide Ablageelemente 26 synchron bewegt werden.

## Patentansprüche

1. Transportwagen (10) mit einem Fahrgestell, an dem ein Ablageelement (26) zur Aufnahme eines Schneidwerks (24) und/oder eines Vorsatzschneidwerks (30) angebracht ist, wobei das Ablageelement (26) um eine Achse (42) verschwenkbar am Fahrgestell gelagert ist, **dadurch gekennzeichnet, dass** die Position der Achse (42) gegenüber dem Fahrgestell durch Verschwenken eines die Achse (42) halternden Elements veränderbar ist.

2. Transportwagen (10) nach Anspruch 1, **dadurch gekennzeichnet, dass** das die Achse (42) halternde Element um eine Schwenkachse verschwenkbar ist, die von der Achse (42) beabstandet ist.

3. Transportwagen (10) nach Anspruch 2, **dadurch gekennzeichnet, dass** die Achse (42) und die Schwenkachse des die Achse (42) halternden Elements parallel zueinander und vorzugsweise parallel zur Fahrtrichtung verlaufen.

4. Transportwagen (10) nach einem der Ansprüche 1 bis 3, **gekennzeichnet durch** einen ersten Antrieb, insbesondere einen ersten Hydraulikzylinder (38), mit dem das die Achse (42) halternde Element um die Schwenkachse verschwenkbar ist.

5. Transportwagen (10) nach Anspruch 4, **dadurch gekennzeichnet, dass** der erste Antrieb zur Drehung einer Welle (50) eingerichtet ist, an der das die Achse (42) halternde Element angebracht ist, wobei die Längsachse der Welle (50) und die Schwenkachse übereinstimmen.

6. Transportwagen (10) nach einem der Ansprüche 1 bis 5, **gekennzeichnet durch** einen zweiten Antrieb, insbesondere einen zweiten Hydraulikzylinder (46), mit dem das Ablageelement (26) um die Achse (42) schwenkbar ist.

7. Transportwagen (10) nach einem der Ansprüche 1 bis 6, **dadurch gekennzeichnet, dass** am Fahrgestell zusätzlich ein weiteres Ablageelement (18) befestigt ist.

8. Transportwagen (10) nach Anspruch 7, **dadurch gekennzeichnet, dass** das weitere Ablageelement (18) starr oder federnd am Fahrgestell befestigt ist.

9. Transportwagen (10) nach Anspruch 7 oder 8, **dadurch gekennzeichnet, dass** auf dem schwenkbaren Ablageelement (26) ein Vorsatzschneidwerk (30) ablegbar und/oder abgelegt ist, und dass auf dem weiteren Ablageelement (18) ein Schneidwerk (24) ablegbar und/oder abgelegt ist.

10. Transportwagen nach Anspruch 9, **dadurch gekennzeichnet, dass** das schwenkbare Ablageelement (26) und das weitere Ablageelement (18) derart angeordnet sind, dass ein auf dem schwenkbaren Ablageelement (26) angeordnetes Vorsatzschneidwerk (30) in Richtung auf ein Schneidwerk (24), das sich auf dem weiteren Ablageelement (18) befindet, zu bzw. davon fort bewegbar und daran fixierbar bzw. davon trennbar ist.

11. Transportwagen nach einem der Ansprüche 1 bis 10, **dadurch gekennzeichnet, dass** das schwenkbare Ablageelement (26) zwischen einer Stellung, in der es horizontal orientiert ist und einer Stellung, in der es geneigt ist, bewegbar ist, wobei es in der geneigten Stellung höher als in der horizontalen Stellung ist.

12. Transportwagen nach einem der Ansprüche 7 bis 11, **dadurch gekennzeichnet, dass** das schwenkbare Ablageelement (26) in der geneigten Stellung mit dem weiteren Ablageelement (18) in derselben Ebene liegt.

## Claims

1. Transport trailer (10), having a chassis, on which a storage element (26) for receiving a cutting unit (24) and/or a cutting unit attachment (30) is attached, the storage element (26) being mounted pivotably on the chassis about an axle (42), **characterised in that** the position of the axle (42) relative to the chassis can be altered by pivoting an element holding the axle (42).

2. Transport trailer (10) according to claim 1, **characterised in that** the element holding the axle (42) is pivotable about a pivot axis which is at a spacing from the axle (42).

3. Transport trailer (10) according to claim 2, **characterised in that** the axle (42) and the pivot axis of the element holding the axle (42) extend parallel to each other and preferably parallel to the direction of travel.

4. Transport trailer (10) according to one of the claims 1 to 3, **characterised by** a first drive, in particular a first hydraulic cylinder (38), with which the element holding the axle (42) is pivotable about the pivot axis.

5. Transport trailer (10) according to claim 4, **characterised in that** the first drive is fitted for rotating a shaft (50) on which the element holding the axle (42) is attached, the longitudinal axis of the shaft (50) and the pivot axis coinciding.

6. Transport trailer (10) according to one of the claims 1 to 5, **characterised by** a second drive, in particular a second hydraulic cylinder (46), with which the storage element (26) is pivotable about the axis (42).

7. Transport trailer (10) according to one of the claims 1 to 6, **characterised in that** in addition a further storage element (18) is mounted on the chassis.

8. Transport trailer (10) according to claim 7, **characterised in that** the further storage element (18) is mounted rigidly or resiliently on the chassis.

9. Transport trailer (10) according to claim 7 or 8, **characterised in that** a cutting unit attachment (30) can be stored and/or is stored on the pivotable storage element (26), and **in that** a cutting unit (24) can be stored and/or is stored on the further storage element (18).

10. Transport trailer according to claim 9, **characterised in that** the pivotable storage element (26) and the further storage element (18) are disposed in such a manner that a cutting unit attachment (30), which is disposed on the pivotable storage element (26), can be moved in the direction towards a cutting unit (24), which is located on the further storage element (18), or away therefrom and can be fixed thereon or separated therefrom.

11. Transport trailer according to one of the claims 1 to 10, **characterised in that** the pivotable storage element (26) is movable between a position in which it is orientated horizontally and a position in which it is inclined, it being higher in the inclined position than in the horizontal position.

12. Transport trailer according to one of the claims 7 to 11, **characterised in that**, in the inclined position, the pivotable storage element (26) is situated in the same plane as the further storage element (18).

## Revendications

1. Chariot de transport (10), du type comportant un châssis sur lequel est monté un élément de réception (26) destiné à accueillir une table de coupe (24) et/ou une table de coupe préparatoire (30), l'élément de réception (26) étant monté sur le châssis de façon à pouvoir basculer autour d'un axe (42), **caractérisé en ce que** la position de l'axe (42) peut être modifiée par rapport au châssis par basculement d'un élément de soutien de l'axe (42).

2. Chariot de transport (10) selon la revendication 1, **caractérisé en ce que** l'élément de soutien de l'axe (42) peut basculer autour d'un axe de basculement situé à une certaine distance de l'axe (42).

3. Chariot de transport (10) selon la revendication 2, **caractérisé en ce que** l'axe (42) et l'axe de basculement de l'élément de soutien de l'axe (42) sont parallèles l'un à l'autre et de préférence parallèles à la direction de déplacement.

4. Chariot de transport (10) selon l'une quelconque des revendications 1 à 3, **caractérisé par** un premier actionneur, plus particulièrement un premier cylindre hydraulique (38), avec lequel l'élément de soutien de l'axe (42) peut être basculé autour de l'axe de basculement.

5. Chariot de transport (10) selon la revendication 4, **caractérisé en ce que** le premier actionneur est installé en vue de faire tourner un arbre (50) sur lequel est monté l'élément de soutien de l'axe (42), l'axe longitudinal de l'arbre (50) et l'axe de basculement étant en concordance.

6. Chariot de transport (10) selon l'une quelconque des revendications 1 à 5, **caractérisé par** un second actionneur, plus particulièrement un second cylindre hydraulique (46), au moyen duquel l'élément de réception (26) peut subir un basculement autour de l'axe (42).

7. Chariot de transport (10) selon l'une quelconque des revendications 1 à 6, **caractérisé en ce que**, au châssis, est fixé au surplus un élément de réception supplémentaire (18).

8. Chariot de transport (10) selon la revendication 7, **caractérisé en ce que** l'élément de réception supplémentaire (18) est fixé au châssis de façon rigide ou élastique.

9. Chariot de transport (10) selon l'une ou l'autre des revendications 7 ou 8, **caractérisé en ce que**, sur l'élément de réception basculable (26), est installée et/ou peut être installée une table de coupe préparatoire (30), et **en ce que**, sur l'élément de réception supplémentaire (18), est installée et/ou peut être installée une table de coupe (24).

10. Chariot de transport (10) selon la revendication 9, **caractérisé en ce que** l'élément de réception basculable (26) et l'élément de réception supplémentaire (18) sont disposés de manière telle qu'une table de coupe préparatoire (30), disposée sur l'élément de réception basculable (26), peut être déplacée dans la direction d'une table de coupe (24) qui se trouve sur l'élément de réception supplémentaire (18), en pouvant s'en rapprocher ou s'en éloigner, et en pouvant lui être fixée ou en être séparée.

11. Chariot de transport (10) selon l'une quelconque des revendications 1 à 10, **caractérisé en ce que** l'élément de réception basculable (26) est déplaçable entre une position dans laquelle il est orienté horizontalement et une position dans laquelle il est incliné, l'élément de réception basculable (26) étant situé plus haut dans la position inclinée que dans la position horizontale.

12. Chariot de transport (10) selon l'une quelconque des revendications 7 à 11, **caractérisé en ce que** l'élément de réception basculable (26), en position inclinée, est dans le même plan que l'élément de réception supplémentaire (18).
